**Europäisches Patentamt**

**European Patent Office**

**Office européen des brevets**

(19)

(11) Veröffentlichungsnummer: **0 170 185**
**B1**

(12) ## EUROPÄISCHE PATENTSCHRIFT

(45) Veröffentlichungstag der Patentschrift:
09.03.88

(51) Int. Cl.⁴: **G 02 B 6/44**

(21) Anmeldenummer: **85109150.4**

(22) Anmeldetag: **22.07.85**

(54) Bandförmiges Übertragungselement und Verfahren zu dessen Herstellung.

(30) Priorität: **02.08.84 DE 3428567**

(43) Veröffentlichungstag der Anmeldung:
**05.02.86 Patentblatt 86/6**

(45) Bekanntmachung des Hinweises auf die Patenterteilung:
**09.03.88 Patentblatt 88/10**

(84) Benannte Vertragsstaaten:
**AT BE CH DE FR GB IT LI LU NL SE**

(56) Entgegenhaltungen:
**EP - A - 0 104 864**
**EP - A - 0 107 468**
**FR - A - 2 435 432**
**US - A - 3 718 515**
**US - A - 4 302 073**

**ELECTRONICS & COMMUNICATIONS IN JAPAN, Band 63, Nr. 8, August 1980, Seiten 69-77, Scripta Publishing Co., Silver Spring, Maryland, US; R. YAMAUCHI et al.: "Residual stresses of fibers in tape-type optical cable and their reduction"**

(73) Patentinhaber: **Siemens Aktiengesellschaft Berlin und München, Wittelsbacherplatz 2, D-8000 München 2 (DE)**

(72) Erfinder: **Oestreich, Ulrich, Dipl.-Ing.,**
**Karl-Witthalm-Strasse 15, D-8000 München 70 (DE)**
Erfinder: **Mayr, Ernst, Wernbergstrasse 5,**
**D-8130 Starnberg (DE)**

## Beschreibung

Die Erfindung bezieht sich auf bandförmiges Übertragungselement mit mehreren mit je einer Beschichtung versehenen optischen Fasern, die nebeneinander auf einer Verbindungsschicht befestigt sind.

Aus der US-PS 4 147 407 ist ein bandförmiges Übertragungselement mit mehreren optischen Fasern bekannt, wobei die Fasern aussen mit einer Beschichtung aus Kunststoff versehen sind. Dabei berühren sich die Beschichtungen (coatings) der einzelnen Fasern, so dass insgesamt eine bandförmige Struktur entsteht. Diese hat jedoch den Nachteil, dass sie nicht oder nur sehr wenig quer zu ihrer Längsachse gebogen oder eingerollt werden kann, weil sonst unzulässige mechanische Kräfte und Deformationen unmittelbar über die Beschichtung auf die innenliegenden optischen Fasern übertragen werden.

Aus der EP-A-0 107 468 ist ein bandförmiges Übertragungselement bekannt, bei dem die mit einer Beschichtung versehenen Fasern auf einer Verbindungsschicht befestigt sind.

Aus der US-PS 3 883 218 ist ein bandförmiges Übertragungselement bekannt, bei dem aus Kern- und Mantelmaterial bestehende optische Fasern auf einem dünnen Papierband mit Abstand nebeneinander angeordnet sind. Um die optischen Fasern in ihrer Lage zu sichern, ist auf dem Papierband eine Klebeschicht vorgesehen, auf welcher die Fasern aufliegen. Derartige Anordnungen haben den Nachteil, dass zusätzlich auf die Verbindungsfolie (in Form des Papierbandes) ein Klebematerial aufgebracht werden muss, und dass es bei dünnen Schichten des Klebematerials schwer fällt, die optischen Fasern ausreichend gut zu sichern. Ein weiterer Nachteil dieser Anordnung besteht darin, dass die optischen Fasern mit ihrem Coating über das Klebematerial an der relativ dicken bandförmigen Verbindungsfolie gehalten werden müssen.

Der vorliegenden Erfindung liegt die Aufgabe zugrunde, ein bandförmige Übertragungselement der eingangs genannten Art so weiterzubilden, dass in einfacher Weise eine gute und zuverlässige Verbindung zwischen den optischen Fasern einerseits und der Trägerfolie andererseits erzielt wird und dass die Fasern gegeneinander ein Höchstmass an Flexibilität erreichen. Dies wird gemäss der Erfindung erreicht, dass die Verbindungsschicht aus dem gleichen Material besteht wie die Beschichtung der optischen Fasern, und dass die Befestigung der beschichteten Fasern auf der Verbindungsschicht unmittelbar durch dieses gemeinsame Material erfolgt, wobei diese Befestigung dadurch erreichbar ist, dass man die beschichteten Fasern in Kontakt mit dem noch weichen Material der Verbindungsschicht bringt.

Da die Verbindungsschicht aus dem gleichen Material besteht wie die Beschichtung der optischen Fasern, ist eine Bindung infolge der Gleichartigkeit der Materialien in einfacher und sicherer Weise möglich. Es kann ohne Einsatz zusätzlichen Klebemittels gearbeitet werden, weil die beschichteten Fasern lediglich mit dem noch weichen Material der zweckmässig folienförmigen Verbindungsschicht in Kontakt gebracht werden müssen, um eine ausreichend sichere Verbindung zwischen beiden Elementen nämlich der äusseren Beschichtung der optischen Fasern und der Verbindungsschicht herzustellen. Die Fasern werden durch die Verbindungsschicht auf hinreichendem Abstand zueinander gehalten.

Die Erfindung betrifft weiterhin ein Verfahren zur Herstellung eines bandförmigen Übertragungselementes, welches dadurch gekennzeichnet ist, dass mehrere beschichtete optische Fasern an einer mit dem flüssigen Material der späteren Verbindungsschicht benetzten Walze unter Berührung so vorbeigeführt werden, dass sich ein dünner flüssiger Verbindungsfilm zwischen den beschichteten Fasern bildet, wobei nach dem Erstarren das bandförmige Übertragungselement entsteht.

Dieses Verfahren ist insofern besonders einfach, weil lediglich an einer Seite der nebeneinander liegenden optischen Fasern mittels der Druckwalze eine filmartige Benetzung und Überbrückung hergestellt werden muss, die anschliessend nach der Aushärtung als folienförmige Verbindungsschicht des Übertragungselementes dient.

Eine Abwandlung dieses Herstellungsverfahrens sieht vor, dass das Material der Verbindungsschicht aus einer Flachdüse gepresst und anschliessend im noch weichen Zustand auf die vorbeilaufenden beschichteten optischen Fasern gelegt wird. Hier wird die Verbindung zwischen der Trägerfolie und den beschichteten optischen Fasern einfach dadurch hergestellt, dass letztere im noch weichen Zustand gegen die Verbindungsschicht gepresst werden und infolge der Gleichartigkeit der Materialien eine ausreichend feste und sichere Halterung gewährleistet wird.

Die Erfindung und ihre Weiterbildungen werden nachfolgend anhand von Zeichnungen näher erläutert. Es zeigen:

Fig. 1 ein optisches Kabel im Querschnitt mit einem Übertragungselement gemäss der Erfindung,

Fig. 2 ein optisches Kabel im Querschnitt mit einem Übertragungselement nach der Erfindung in eingerolltem Zustand,

Fig. 3 ein optisches Kabel im Querschnitt mit mehreren bandförmigen Übertragungselementen nach der Erfindung,

Fig. 4 eine erste Einrichtung zur Herstellung eines bandförmigen Übertragungselementes nach der Erfindung und

Fig. 5 eine zweite Einrichtung zur Herstellung eines bandförmigen Übertragungselementes nach der Erfindung.

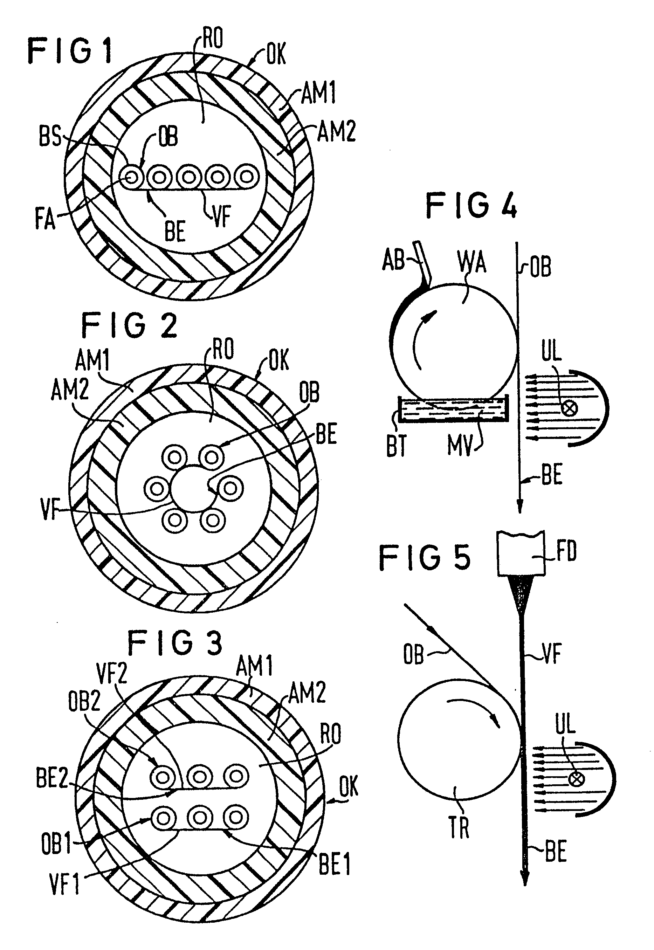

In Fig. 1 ist ein optischers Übertragungselement OK (zum Beispiel optisches Kabel) dargestellt, das einen zweischichtigen Aussenmantel AM1 und AM2 aufweist, in dessen Innerem eine zylindrische Öffnung RO gebildet wird, welche zur Aufnahme eines bandförmigen Übertragungselements BE dient. Dieses besteht aus einer dünnen elastischen Verbindungsschicht VF, auf der nebeneinander und im Abstand zueinander Lichtwellenleiteradern OB angeordnet sind. Diese Lichtwellenleiteradern OB weisen in ihrem Inneren die aus Kern- und Mantelmaterial bestehende optische Faser FA auf, während aussen eine Beschichtung BS aus einem Kunststoffmaterial vorgesehen ist. Der Aussendurchmesser einer derartig beschichteten Lichtwellenleiterader OB liegt zwischen 200 und 500 µm. Die Beschichtung BS und die Verbindungsschicht VF bestehen aus dem gleichen Material, vorzugsweise einem UV-härtbaren Harz, so dass sich in einfacher Weise eine enge Bindung zwischen beiden Materialien herstellen lässt. Besonders vorteilhaft lassen sich für die Beschichtung BS und für die Verbindungsschicht VF UVhärtbare Acrylharze verwenden. Das dargestellte optische Kabel kann im Bereich der Kabelseele mit einer geeigneten Füllmasse versehen werden um eine entsprechende Längsdichtigkeit zu gewährleisten.

Die Verbindungsschicht VF läuft etwa tangential zu dem Aussenrand der Beschichtung BS der einzelnen Lichtwellenleiteradern OB und ergibt somit auch die Möglichkeit, das bandförmige Übertragungselement insgesamt einzurollen. Eine Anordnung mit solcher Konfiguration ist in Figur 2 gezeigt, wo das bandförmige Übertragungselement BE so eingerollt ist, dass die Verbindungsschicht VF im Inneren der etwa kreisförmigen Gesamtstruktur zu liegen kommt. Dadurch lassen sich geringere Aussenabmessungen des optischen Elements OK bei gleichen Faserzahlen gegenüber Figur 1 realisieren.

Bei der Anordnung nach Figur 3 sind im Bereich der Kabelseele in der Öffnung RO zwei bandförmige Übertragungselemente BE1 und BE2 vorgesehen, die jeweils je für sich mit einer Reihe von Lichtwellenleiteradern OB1 und OB2 auf Verbindungsschichten VF1 und VF2 ausgestattet sind.

In Fig. 4 ist eine Einrichtung dargestellt, mit welcher die Verbindungsfolien in einfacher Weise auf Lichtwellenleiteradern OB aufgebracht werden können, die in einer Ebene senkrecht zur Zeichenebene nebeneinander liegen und von oben nach unten geführt werden. Für das Auftragen der Verbindungsschicht ist eine Walze WA vorgesehen, die sich im Transportsinn dreht und in ihrem unteren Teil in einen Behälter BT eintaucht, der mit dem Material MV für die Verbindungsfolie VF nach den Figuren 1 bis 3 gefüllt ist, das in flüssiger Form vorliegt. Am oberen Ende der Walze WA ist ein Abstreifer AB vorgesehen, der sicherstellt, dass nur eine entsprechend dünne Benetzung auf der Walzenoberfläche verbleibt und diese Benetzung durch Berührung mit der Reihe von optischen Adern OB am rechten Ende der Walze einen dünnen Verbindungsfilm zwischen den einzelnen Lichtwellenleiteradern OB ergibt. Zur Beschleunigung des Aushärtungsvorganges (Vernetzung) ist eine Vernetzungseinrichtung nach der Walze WA angeordnet, die im vorliegenden Beispiel als eine UV-Lampe UL gezeichnet ist. Nach dem Vernetzen und damit Aushärten des Materials der Verbindungsfolie liegt das fertige bandförmige Übertragungselement BE vor. Die Vernetzung kann anstelle von UV-Licht auch auf andere Art und Weise zum Beispiel durch Erwärmung erfolgen.

Bei der Einrichtung nach Figur 5 werden die Lichtwellenleiteradern OB in einer Reihe nebeneinander einer Trommel TR zugeführt und zwar tangential schräg von oben.

Weiterhin ist eine Flachdüse FD vorgesehen, aus der die Verbindungsschicht VF in weicher Form austritt und durch einen entsprechenden Längszug auf die notwendige geringe Wandstärke heruntergereckt wird. Die gereckte Verbindungsschicht VF wird unter einem gewissen geringen Anpressdruck an der Trommel TR etwa tangential vorbeigeführt, wobei kurz vor der Berührungsstelle bereits die optischen Adern OB auf die Trommel aufgelaufen sind. Auf diese Weise wird schnell und zuverlässig eine gute mechanische Verbindung zwischen der Verbindungsschicht VF einerseits und den mit dem gleichen Material wie die Verbindungsschicht VF beschichteten Lichtwellenleiteradern OB hergestellt. Auch in diesem Fall ist eine Anregung durch Erwärmung oder UV-Bestrahlung zur Beschleunigung des Verfestigungsprozesses der Verbindungsschicht VF in Form einer UV-Lampe UL nötig. Der Abstand zwischen den einzelnen Lichtwellenleiteradern OB auf der Verbindungsschicht VF sollte zweckmässig zwischen dem halben und ganzen Aussendurchmesser der Lichtwellenleiterfaser gewählt werden. Der Vorteil der UV-Bestrahlung besteht, hinreichende Absorption vorausgesetzt, in dem hohen Niveau der Energiequanten und damit in der schnellen Vernetzung.

Bei der Erfindung entstehen somit flexible, geordnete Faserarrangements, die auf bekannte Weise in (ggf. gefüllte) Hohladern eingebracht werden können und sich bei der Montage leicht auseinandernehmen, vom Coating-Material befreien und entsprechend spleissen zu lassen.

**Patentansprüche**

1. Bandförmiges Übertragungselement (BE) mit mehreren mit je einer Beschichtung (BS) versehenen optischen Fasern (FA), die nebeneinander auf einer Verbindungsschicht (VF) befestigt sind, dadurch gekennzeichnet, dass die Verbindungsschicht (VF) aus dem gleichen Material besteht wie die Beschichtung (BS) der optischen Fasern (FA), und dass die Befestigung der beschichteten Fasern (FA) auf der Verbindungsschicht (VF) unmittelbar durch dieses gemeinsame Material erfolgt, wobei diese Befestigung dadurch erreichbar ist, dass man die beschichteten Fasern in Kontakt mit dem noch weichen Material der Verbindungsschicht bringt.

2. Übertragungselement nach Anspruch 1, dadurch gekennzeichnet, dass die Wandstärke der Verbindungsschicht (VF) geringer gewählt ist als die Stärke der Beschichtung (BS) der optischen Fasern (OF).

3. Übertragungselement nach einem der vorhergehenden Ansprüche, dadurch gekennzeichnet, dass die Beschichtung (BS) und die Verbindungsschicht (VF) aus einem UV-härtbaren Harz, insbesondere Acrylharz, bestehen.

4. Optisches Kabel (OK) mit einem Übertragungselement nach einem der vorhergehenden Anspüche, dadurch gekennzeichnet, dass das optische Kabel (OK) mindestens eine Öffnung (RO) aufweist, in welcher das bandförmige Übertragungselement (BE), vorzugsweise im zumindest teilweise eingerollten Zustand, angeordnet ist.

5. Optisches Kabel nach Anspruch 4, dadurch gekennzeichnet, dass das bandförmige Übertragungselement (BE) lose in der Öffnung (RO) angeordnet ist.

6. Verfahren zur Herstellung eines bandförmigen Übertragungselementes nach einem der Ansprüche 1 bis 3, dadurch gekennzeichnet, dass mehrere beschichtete optische Fasern (OB) an einer mit dem flüssigen Material (MV) der späteren Verbindungsschicht (VF) benetzten Walze (WA) unter Berührung so vorbeigeführt werden, dass sich ein dünner flüssiger Verbindungsfilm zwischen den beschichteten Fasern bildet, wobei nach dem Erstarren das bandförmige Übertragungselement entsteht.

7. Verfahren zur Herstellung eines bandförmigen Übertragungselementes nach einem der Ansprüche 1 bis 3, dadurch gekennzeichnet, dass das Material (MV) der Verbindungsschicht (VF) aus einer Flachdüse (FD) gepresst, gereckt und anschliessend im noch weichen Zustand auf die vorbeilaufenden beschichteten optischen Fasern (OB) gelegt wird, wobei nach dem Erstarren das bandförmige Übertragungselement entsteht.

8. Verfahren nach einem der Ansprüche 6 oder 7, dadurch gekennzeichnet, dass die mit den beschichteten optischen Fasern (OB) versehene Verbundschicht (VF) einer Erwärmung oder UV-Bestrahlung unterworfen wird.

**Claims**

1. A band-shaped transmission element (BE) comprising a plurality of optical fibres (FA) each provided with a coating (BS) and which are attached one beside another to a connecting layer (VF), characterised in that the connecting layer (VF) consists of the same material as the coating (BS) of the optical fibres (FA); and that the attachement of the coated fibres (FA) to the connecting layer (VF) is effected directly by means of this common material, this attachment being achieved by bringing the coated fibres into contact with the still soft material of the connecting layer.

2. A transmission element as claimed in Claim 1, characterised in that the wall thickness of the connecting layer (VF) is smaller than the thickness of the coating (BS) of the optical fibres (OF).

3. A transmission element as claimed in one of the preceding Claims, characterised in that the coating (BS) and the connecting layer (VF) consist of a UV-hardenable resin, particularly but not exclusively an acrylic resin.

4. An optical cable (OK) comprising a transmission element as claimed in one of the preceding Claims, characterised in that the optical cable (OK) contains at least one opening (RO) in which the band-shaped transmission element (BE) is arranged, preferably in an at least partially rolled state.

5. An optical cable as claimed in Claim 4, characterised in that the band-shaped transmission element (BE) is arranged loosely in the opening (RO).

6. A process for the production of a band-shaped transmission element as claimed in one of Claims 1 to 3, characterised in that a plurality of coated optical fibres (OB) are led past a roller (WA), wetted with the liquid material (MV) of the subsequent connecting layer (VF), in contact therewith, in such manner that a thin connecting film of liquid is formed between the coated fibres, whereby, after setting, the band-shaped transmission element is formed.

7. A process for the production of a band-shaped transmission element as claimed in one of Claims 1 to 3, characterised in that the material (MV) of the connecting layer (VF) is extruded from a sheet dye (FD), stretched, and then, whilst still in the soft state, applied to passing, coated optical fibres (OB), whereby, after setting, the band-shaped transmission element is formed.

8. A process as claimed in one of Claims 6 or 7, characterised in that the connection layer (VF) provided with the coated optical fibres (OB), is subjected to heating or UV-irradiation.

**Revendications**

1. Elément de transmission (BE) en forme de bande, comportant plusieurs fibres otpiques (FA), qui sont munies chacune d'un revêtement (BS) et sont fixées côte-à-côte sur une couche de liaison (VF), caractérisé par le fait que la couche de liaison (VF) est constituée par le même materiau que le revêtement (BS) des fibres optiques (FA) et que la fixation des fibres (FA) munies de leur revêtement sur la couche de liaison (VF) s'effectue directement grâce à ce matériau commun, cette fixation pouvant être obtenue grâce au fait qu'on place les fibres munies de leur revêtement en contact avec le matériau encore mou de la couche de liaison.

2. Elément de transmission suivant la revendication 1, caractérisé par le fait que l'épaisseur de paroi de la couche de liaison (VF) est choisie inférieure à l'épaisseur de revêtement (BS) des fibres optiques (OF).

3. Elément de transmission suivant l'une des revendications précédentes, caractérisé par le fait que le revêtement (BS) et la couche de liaison (VF) sont constitués par une résine durcissable au rayonnement ultraviolet, notamment une résine acrylique.

4. Câble optique (OK) comportant un élément de transmission suivant l'une des revendications précédentes, caractérisé par le fait que le câble optique (OK) possède au moins une ouverture (OB), dans laquelle l'élément de transmission en forme de bande (BE) est disposé de préférence à l'état enroulé au moins partiellement.

5. Câble optique suivant la revendication 4, caractérisé par le fait que l'élément de transmission (BE) en forme de bande est monté libre dans l'ouverture (RO).

6. Procédé pour fabriquer un élément de transmission en forme de bande suivant l'une des revendications ã 3, caractérisé par le fait qu'on déplace plusieurs fibres optiques (OB) munies de leur revêtement devant et en contact avec un cylindre (WA) mouillé avec le matériau liquide (MV) de la couche de liaison (VF) formée ultérieurement, de telle sorte qu'il se forme une mince pellicule de liaison liquide entre les fibres munies de leur revêtement, auquel cas on obtient, après solidification, l'élément de transmission en forme de bande.

7. Procédé pour fabriquer un élément de transmission en forme de bande suivant l'une des revendications 1 à 3, caractérisé par le fait que l'on refoule le matériau (MV) de la couche de liaison (VF) hors d'une buse plate (FD), on l'étire et on l'applique ensuite à l'état encore mou sur les fibres optiques (OB) munies d'un revêtement circulent à proximité, auquel cas on obtient, après solidification, l'élément de transmission en forme de bande.

8. Procédé suivant l'une des revendications 6 ou 7, caractérisé par le fait qu'on soumet la couche de liaison (VF) portant les fibres optiques (OB) munies de leur revêtement, à un chauffage ou à un rayonnement ultraviolet.

FIG 1

FIG 2

FIG 3

FIG 4

FIG 5